# EUROPÄISCHE PATENTSCHRIFT

(11) **EP 3 587 738 B1**
(45) Veröffentlichungstag und Bekanntmachung des Hinweises auf die Patenterteilung: **19.11.2025**
(21) Anmeldenummer: 19181575.2
(22) Anmeldetag: 21.06.2019
(51) Int. Cl.: F01D 9/04, F01D 11/00, F01D 25/24, F16J 15/08

(54) **DICHTUNGSANORDNUNG FÜR STRÖMUNGSMASCHINENBAUTEILE**
SEAL ARRANGEMENT FOR TURBOMACHINE ENGINE COMPONENTS
AGENCEMENT D'ÉTANCHÉITÉ POUR COMPOSANTS DE TURBOMACHINE

(30) Priorität: 28.06.2018 DE 102018210599
(43) Veröffentlichungstag der Anmeldung: 01.01.2020
(73) Patentinhaber: MTU Aero Engines AG, 80995 München (DE)
(72) Erfinder: Feldmann, Manfred, 82223 Eichenau (DE); Sangl, Janine, Dachau 85221 (DE); Kammerer, Armin, 85244 Röhrmoos (DE)

(56) Entgegenhaltungen:
- EP-A1- 2 060 743
- EP-A1- 2 863 020
- EP-A1- 3 112 599
- EP-A1- 3 147 461
- EP-A2- 1 845 236
- DE-A1- 102008 003 110
- US-A- 3 893 786
- US-A1- 2007 231 123
- US-A1- 2013 266 416

## Beschreibung

Die vorliegende Erfindung betrifft eine Anordnung einer axialen Strömungsmaschine mit zwei statischen Bauteilen und einem Dichtelement, sowie ein Verfahren zum Abdichten von einem ersten und zweiten Dichtufer der statischen Bauteile.

Aus der eigenen EP 2 853 692 A1 ist eine Leitschaufelanordnung mit einem Gehäusebauteil, das einen Gehäusehaken aufweist, und einem Leitschaufelbauteil bekannt, das eine auf einer Plattform angeordnete Leitschaufel und einen von der Plattform abstehenden Leitschaufelhaken aufweist, der den Gehäusehaken kontaktiert. Diese Leitschaufelanordnung weist ein Dichtelement auf, das mit einem versteifend wirkenden Endhaken an einen Steg fixiert ist.

Aus der eigenen DE 10 2013 212 501 A1 ist ebenfalls eine Leitschaufelanordnung mit einem Gehäusebauteil, das einen Gehäusehaken aufweist, und einem Leitschaufelbauteil bekannt, das eine auf einer Plattform angeordnete Leitschaufel und einen von der Plattform abstehenden Leitschaufelhaken aufweist, der den Gehäusehaken kontaktiert. An dem Leitschaufelhaken sind durch stirnseitige Rücknahmen ausgebildete Ausnehmungen ausgebildet.

Weitere Anordnungen sind aus den Dokumenten EP1845236A2, EP3147461A1, US20070231123A1, US3893786A1, US20130266416A1 und DE102008003110A1 bekannt.

Eine Aufgabe der vorliegenden Erfindung ist es, eine axiale Strömungsmaschine, insbesondere deren Montage und/oder Betriebsverhalten, zu verbessern.

Diese Aufgabe wird durch eine Anordnung mit den Merkmalen des Anspruchs 1 bzw. ein Verfahren mit den Merkmalen des Anspruchs 9 gelöst. Anspruch 8 stellt eine axiale Strömungsmaschine mit wenigstens einer hier beschriebenen Bauteilanordnung unter Schutz. Vorteilhafte Ausführungsformen der Erfindung sind Gegenstand der Unteransprüche.

Erfindungsgemäß weist eine Anordnung, bei bzw. mit der ein erstes Dichtufer eines ersten statischen Bauteils und ein zweites Dichtufer eines zweiten statischen Bauteils einer axialen Strömungsmaschine, insbesondere einer Turbinen- oder Verdichterstufe einer Gasturbine, abgedichtet werden bzw. sind bzw. die hierzu vorgesehen, insbesondere eingerichtet, ist bzw. verwendet wird, die beiden statischen Bauteile, die, insbesondere infolge unterschiedlicher thermischer Ausdehnungen im Betrieb oder dergleichen, axial relativ zueinander verschiebbar sind, und ein Dichtelement auf, das in Umfangsrichtung der Strömungsmaschine segmentiert ausgestaltet ist. Hierdurch können in einer Ausführung (Vor)Spannungen im Dichtelement vorteilhaft in Umfangsrichtung verteilt werden.

Diesbezüglich wird ergänzend auf die eingangs genannte eigene EP 2 853 692 A1 Bezug genommen.

Ein erstes, insbesondere radiales Ende des Dichtelements ist an, insbesondere in, einer Nut in dem ersten Dichtufer des ersten Bauteils axial gekoppelt, wobei diese Nut einem, insbesondere (auch) radial, gegenüberliegenden zweiten, insbesondere radialen, Ende des Dichtelements zugewandt ist, wobei dieses zweite Ende des Dichtelements an dem zweiten Dichtufer axial anliegt.

Hierdurch kann in einer Ausführung die Montage des Dichtelements vereinfacht werden. Zusätzlich oder alternativ kann hierdurch in einer Ausführung die Gestaltung des Dichtelements vereinfacht und/oder dieses flexibler eingesetzt werden. Zusätzlich oder alternativ kann hierdurch in einer Ausführung eine Biegesteifigkeit des Dichtelements reduziert und so dessen Dichtwirkung verbessert werden.

Eine Axialrichtung ist in einer Ausführung parallel zu einer Dreh- bzw. (Haupt)Maschinenachse der Strömungsmaschine, eine Umfangsrichtung entsprechend eine Rotationsrichtung um diese Achse, eine Radialrichtung senkrecht zur Axial- und Umfangsrichtung.

In einer Ausführung weist das zweite Dichtufer einen Anschlag zur Begrenzung einer radialen Bewegung des Dichtelements auf. In einer Ausführung ist eine (radiale Nut)Tiefe der Nut größer als ein (maximaler, radialer) Abstand zwischen dem Dichtelement, insbesondere dessen zweiten Ende, und dem Anschlag.

Hierdurch kann in einer Ausführung die Montage des Dichtelements (weiter) vereinfacht werden.

Eine Nutbreite der Nut an bzw. in dem ersten Bauteil beträgt höchstens das Dreifache, insbesondere höchstens das Doppelte, in einer Ausführung weniger als das Doppelte, einer, insbesondere maximalen, minimalen oder gemittelten, Wandstärke des Dichtelements.

Hierdurch kann in einer Ausführung die Montage und/oder Dichtwirkung des Dichtelements (weiter) verbessert werden.

In einer anderen Ausführung ist die Nut an bzw. in dem ersten Bauteil durch Verbindung zweier Nutschenkel, insbesondere Bleche, hergestellt oder durch zwei nicht fest miteinander verbundene Nutschenkel gebildet bzw. definiert. Hierdurch kann in einer Ausführung eine Herstellung vereinfacht werden.

In einer Ausführung schließt eine Mittellinie des Dichtelements mit einer Radialrichtung der Strömungsmaschine im Mittel bzw. gemittelt einen Winkel ein, der höchstens 45°, insbesondere höchstens 30°, in einer Ausführung höchstens 15° beträgt. Mit anderen Worten ist ein Querschnitt des Dichtelements senkrecht zur Umfangsrichtung in einer Ausführung, wenigstens im Wesentlichen, radial ausgerichtet, kann aber auch geneigt ausgerichtet sein, sodass sich eine Kegelfläche ausbildet.

Hierdurch kann in einer Ausführung die Montage und/oder Dichtwirkung des Dichtelements (weiter) verbessert werden.

In einer Ausführung ist das erste Dichtufer radial innen von dem zweiten Dichtufer angeordnet.

Hierdurch kann in einer Ausführung die Montage des Dichtelements (weiter) verbessert werden.

In einer anderen Ausführung ist das erste Dichtufer radial außen von dem zweiten Dichtufer angeordnet.

Hierdurch kann in einer Ausführung die Dichtwirkung des Dichtelements (weiter) verbessert werden.

In einer Ausführung ist das erste, in der Nut gekoppelte Ende des Dichtelements umschlag- bzw. falzfrei.

Hierdurch kann in einer Ausführung jeweils, insbesondere in Kombination, die Dichtwirkung des Dichtelements (weiter) verbessert werden.

Das Dichtelement ist ein Ringsektor, dessen Querschnitt, wenigstens im Wesentlichen, ein längliches Rechteck ist und dadurch innen und außen eine, wenigstens im Wesentlichen, gleiche Steifigkeit aufweist.

Das Dichtelement ist in Umfangsrichtung segmentiert und besteht insbesondere aus einzelnen, insbesondere in Umfangsrichtung benachbarten und/oder aneinander angrenzenden, Segmenten. Jedes Segment kann aus einem, insbesondere einstückig monolitisch ausgebildetem Blech gebildet sein oder daraus bestehen.

Hierdurch kann in einer Ausführung die Dichtwirkung des Dichtelements (weiter) verbessert werden.

In einer Ausführung kann der Verlauf des Querschnitts gebogen sein.

Hierdurch kann das Dichtelement in einer Ausführung vorteilhaft an eine Umgebungsgeometrie angepasst werden, dieser insbesondere vorteilhaft ausweichen.

In einer Ausführung ist das erste Ende und/oder das zweite Ende zu dem jeweiligen Dichtufer hin gewölbt.

Hierdurch kann in einer Ausführung die Dichtwirkung des Dichtelements (weiter) verbessert werden.

Das Dichtelement wird bzw. ist federfrei bzw. ohne (zusätzliche, separate) Federn an dem ersten und zweiten statischen Bauteil festgelegt und gegen das zweite Dichtufer (axial) vorgespannt.

Hierdurch kann in einer Ausführung eine Beeinträchtigung bzw. ein Nachlassen der Dichtwirkung, insbesondere aufgrund von (thermischem) Kriechen und/oder aufgrund einer Überdehnung der Federn infolge einer starken Axialverschiebung der beiden statischen Bauteile relativ zueinander, vermieden und so die Dichtwirkung des Dichtelements (weiter) verbessert werden.

Das erste statische Bauteil ist ein Gehäusebauteil der axialen Strömungsmaschine, insbesondere einer Turbinen- oder Verdichterstufe einer Gasturbine, und das zweite statische Bauteil ist ein Leitschaufelbauteil der axialen Strömungsmaschine oder das zweite statische Bauteil ist ein Gehäusebauteil der axialen Strömungsmaschine, insbesondere einer Turbinen- oder Verdichterstufe einer Gasturbine, und das erste statische Bauteil ist ein Leitschaufelbauteil der axialen Strömungsmaschine, wobei das Gehäusebauteil wenigstens einen Gehäusehaken aufweist und das Leitschaufelbauteil wenigstens eine auf einer Plattform angeordnete Leitschaufel und wenigstens einen von der Plattform, insbesondere axial, abstehenden Leitschaufelhaken aufweist, der sich auf dem Gehäusehaken, insbesondere radial, abstützt, ihn hierzu in einer Ausführung kontaktiert. Der Leitschaufelhaken ist in einer Ausführung ein vorderer bzw. stromaufwärtiger Leitschaufelhaken.

Diesbezüglich wird ergänzend auf die eingangs genannte eigene DE 10 2013 212 501 A1 Bezug genommen.

In dem Leitschaufelhaken sind eine oder mehrere Durchgangsbohrungen angeordnet, durch die im Betrieb Kühlluft hindurch- bzw. zugeführt wird bzw. die hierzu vorgesehen, insbesondere eingerichtet, sind bzw. verwendet werden.

Hierdurch kann in einer Ausführung im Unterschied zur DE 10 2013 212 501 A1, nach der an dem Leitschaufelhaken durch stirnseitige Rücknahmen ausgebildete Ausnehmungen ausgebildet sind, im Leitschaufelhaken ein konstanter Durchmesser für die Kühlluft realisiert werden, der sich bei axialer Verschiebung von Gehäuse- und Leitschaufelhaken relativ zueinander nicht verändert.

Die ein oder mehreren Durchgangsbohrungen können sich in Radialrichtung oder im Wesentlichen in Radialrichtung, d.h. mit einer maximalen Abweichung von ± 15°, vorzugsweise ± 10°, insbesondere ± 5° von der Radialrichtung, erstrecken. Dadurch kann die Kühlluft nach radial innen oder nach radial außen durch den Leitschaufelhaken strömen werden.

In einer Ausführung weist die axiale Strömungsmaschine, insbesondere (Turbinen- bzw. Verdichterstufe der) Gasturbine, ein Leitgitter mit mehreren Leitschaufeln auf, das in Umfangsrichtung segmentiert ist, wobei eines oder mehrere dieser Leitgittersegmente (jeweils) ein hier beschriebenes Leitschaufelbauteil aufweisen, insbesondere sein bzw. bilden können. Mit anderen Worten ist das Leitschaufelbauteil in einer Ausführung ein Leitschaufel(ring)segment eines in Umfangsrichtung segmentierten Leitgitters bzw. Leitschaufelrings, der mehrere Leitschaufeln aufweist.

Hierdurch kann in einer Ausführung die Herstellung der Durchgangsbohrung(en) (weiter) verbessert werden.

Gemäß der Erfindung weist der Gehäusehaken eine oder mehrere Ausnehmungen auf, die (jeweils) durch eine stirnseitige Rücknahme ausgebildet sind und die bzw. eine der Durchgangsbohrung(en) in dem Leitschaufelhaken wenigstens teilweise überdecken bzw. freigeben.

Hierdurch kann eine Kühlluftströmung (weiter) verbessert werden. Zusätzlich oder alternativ kann hierdurch die Herstellung von Gehäuse- und/oder Leitschaufelhaken (weiter) verbessert werden.

Das Dichtelement kann eine Begrenzung für den Kühlluftstrom bilden und/oder eine Begrenzung für eine den Kühlluftstrom aufnehmende oder abgebende Kavität bilden. Die Kühlluftaufnahme bzw. -Abgabe kann dabei durch die Durchgangsbohrung hindurchströmende Kühlluft erfolgen.

Eine Durchgangsbohrung im Sinne der vorliegenden Erfindung weist in einer Ausführung eine, in einer Ausführung wenigstens abschnittsweise zylindrische oder kegelförmige, geschlossene Innenumfangs- bzw. Mantelfläche bzw. einen Ein- und/oder einen Austritt mit einem geschlossenen bzw. umlaufenden Rand auf, während eine Rücknahme im Sinne der vorliegenden Erfindung im Gegensatz hierzu in einer Ausführung einen Ein- und/oder einen Austritt mit einem offenen bzw. unterbrochenen bzw. nicht umlaufenden Rand aufweist.

Aufgrund der hohen Anforderungen an Dichtwirkung bzw. Kühlluftführung wird die vorliegende Erfindung mit besonderem Vorteil bei Turbinen- und Verdichterstufen von Gasturbinen, insbesondere Flugtriebwerken, verwendet.

Nach einer Ausführung der vorliegenden Erfindung drückt zum Abdichten von dem ersten Dichtufer des ersten statischen Bauteils und dem zweiten Dichtufer des zweiten statischen Bauteils ein abzudichtender Überdruck das zweite Ende des Dichtelements, zusätzlich zu einer entsprechenden (elastischen) Vorspannung des Dichtelements, gegen das zweite Dichtufer bzw. ist die Dichtungsanordnung, insbesondere das Dichtelement, entsprechend eingerichtet, insbesondere ausgelegt, bzw. wird derart verwendet. Zusätzlich oder alternativ drückt zum Abdichten von dem ersten Dichtufer des ersten statischen Bauteils und dem zweiten Dichtufer des zweiten statischen Bauteils in einer Ausführung ein bzw. der abzudichtende(r) Überdruck das erste Ende des Dichtelements gegen das erste Dichtufer bzw. ist die Dichtungsanordnung, insbesondere das Dichtelement, entsprechend eingerichtet, insbesondere ausgelegt, bzw. wird derart verwendet.

Das erste und/oder das zweite statische Bauteil bzw. das Gehäuse- und/oder das Leitschaufelbauteil kann (jeweils) ein- oder mehrstückig ausgebildet sein. Somit bildet auch ein mit einem Gehäusebauteil, insbesondere fest gekoppelt, verbundenes Bauteil, insbesondere zusammen mit diesem einen Gehäusebauteil, (ebenfalls) ein Gehäusebauteil im Sinne der vorliegenden Erfindung, ein mit einem Leitschaufelbauteil, insbesondere fest (gekoppelt), verbundenes Bauteil, insbesondere zusammen mit diesem einen Leitschaufelbauteil, (ebenfalls) ein Leitschaufelbauteil im Sinne der vorliegenden Erfindung.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert, die einzige:

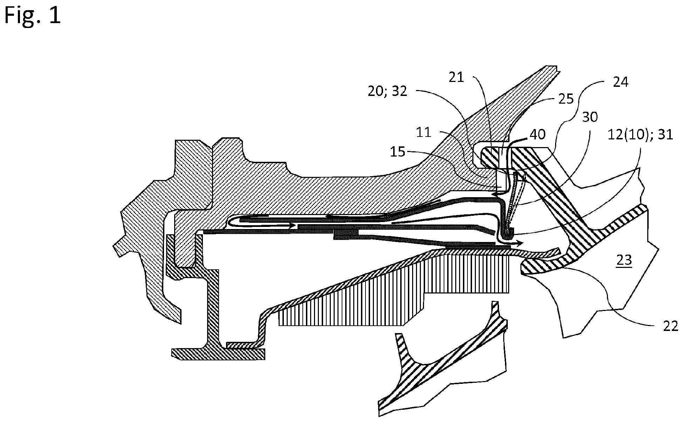

- Fig. 1: eine Anordnung nach einer Ausführung der vorliegenden Erfindung.

Fig. 1 zeigt eine Anordnung nach einer Ausführung der vorliegenden Erfindung in einem Meridianschnitt durch eine (in Fig. 1 entsprechende horizontale, nicht dargestellte) Maschinenachse einer Turbinenstufe einer Gasturbine.

Die Anordnung weist ein mehrstückiges erstes statisches Bauteil mit einem Gehäusehaken 11 und einer Nut 12 in einem ersten Dichtufer 10 des ersten Bauteils sowie ein zweites statisches Bauteil in Form eines in Umfangsrichtung segmentierten Leitschaufelbauteils mit einem zweiten Dichtufer 20, wenigstens einer auf einer Plattform 22 angeordneten Leitschaufel 23 und einem von der Plattform 22 axial abstehenden Leitschaufelhaken 21 auf, der sich auf dem Gehäusehaken 11 abstützt.

Diese beiden statischen Bauteile sind axial relativ zueinander verschiebbar.

Zum Abdichten des ersten Dichtufers 10 und des zweiten Dichtufer 20 ist ein erstes Ende 31 eines in Umfangsrichtung segmentierten Dichtelements 30 in der Nut 12 axial gekoppelt, die einem gegenüberliegenden zweiten Ende 32 des Dichtelements zugewandt ist, das unter Vorspannung an dem zweiten Dichtufer 20 axial anliegt und im Betrieb durch einen abzudichtenden Überdruck eines Kühlluftstromes 40 gegen das zweite Dichtufer 20 gedrückt wird.

Zum Aufprägen der Vorspannung ist das Dichtelement 30 aus einer unverformten Ausgangsform, die in Fig. 1 gestrichelt angedeutet ist, durch axiale Verschiebung des zweiten Dichtufers 20 zum ersten Dichtufer 10 hin elastisch deformiert.

Das zweite Dichtufer weist einen Anschlag 24 zur Begrenzung einer radialen Bewegung des Dichtelements auf.

Der Abstand zwischen dem Anschlag 24 und dem zweiten Ende 32 ist vorzugsweise kleiner als die (Nut)Tiefe der Nut 12 bzw. die radiale Überdeckung des Dichtelements mit der Nut. Dadurch kann das Dichtelement in der Nut gesichert werden.

In dem Leitschaufelhaken 21 sind Durchgangsbohrungen 25 zur Zufuhr bzw. Durchführung des Kühlluftstromes 40 angeordnet.

Der Gehäusehaken 11 weist durch stirnseitige Rücknahmen ausgebildete Ausnehmungen 15 auf, die die Durchgangsbohrung 25 wenigstens teilweise überdecken bzw. freigeben.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 10: erstes Dichtufer
- 11: Gehäusehaken
- 12: Nut
- 15: Ausnehmung
- 20: zweites Dichtufer
- 21: Leitschaufelhaken
- 22: Plattform
- 23: Leitschaufel
- 24: Anschlag
- 25: Durchgangsbohrung
- 30: Dichtelement
- 31: erstes Ende
- 32: zweites Ende
- 40: Kühlluftstrom

## Patentansprüche

1. Anordnung einer axialen Strömungsmaschine mit einem ersten statischen Bauteil, einem zweiten statische Bauteil und mit einem Dichtelement (30) zum Abdichten von einem ersten Dichtufer (10) des ersten statischen Bauteils und einem zweiten Dichtufer (20) des zweiten statischen Bauteils, wobei das erste statische Bauteil ein Gehäusebauteil mit wenigstens einem Gehäusehaken (11) und das zweite statische Bauteil ein Leitschaufelbauteil mit wenigstens einer auf einer Plattform (22) angeordneten Leitschaufel (23) und wenigstens einem von der Plattform abstehenden Leitschaufelhaken (21) ist oder das zweite statische Bauteil ein Gehäusebauteil mit wenigstens einem Gehäusehaken (11) und das erste statische Bauteil ein Leitschaufelbauteil mit wenigstens einer auf einer Plattform (22) angeordneten Leitschaufel (23) und wenigstens einem von der Plattform abstehenden Leitschaufelhaken (21) ist, wobei sich der wenigstens eine Leitschaufelhaken (21) auf dem Gehäusehaken abstützt und in dem Leitschaufelhaken wenigstens eine Durchgangsbohrung (25) zur Kühlluftzufuhr angeordnet ist, wobei die statischen Bauteile axial relativ zueinander verschiebbar sind und das Dichtelement (30) in Umfangsrichtung der Strömungsmaschine segmentiert ausgestaltet ist, wobei ein erstes Ende (31) des Dichtelements in einer Nut (12) an dem ersten Dichtufer des ersten Bauteils axial gekoppelt ist, die einem gegenüberliegenden zweiten Ende (32) des Dichtelements zugewandt ist, das an dem zweiten Dichtufer axial anliegt, wobei das Dichtelement ein Ringsektor ist, dessen Querschnitt, wenigstens im Wesentlichen, ein längliches Rechteck ist und dadurch innen und außen eine, wenigstens im Wesentlichen, gleiche Steifigkeit aufweist, wobei eine Nutbreite der Nut an dem ersten Bauteil höchstens das Dreifache einer Wandstärke des Dichtelements beträgt und wobei das Dichtelement federfrei an dem ersten und zweiten statischen Bauteil festgelegt und gegen das zweite Dichtufer vorgespannt ist, **dadurch gekennzeichnet, dass** der Gehäusehaken (11) wenigstens eine durch eine stirnseitige Rücknahme ausgebildete Ausnehmung (15) aufweist, die die Durchgangsbohrung wenigstens teilweise überdeckt.

2. Anordnung nach dem vorhergehenden Anspruch, **dadurch gekennzeichnet, dass** das zweite Dichtufer einen Anschlag (24) zur Begrenzung einer radialen Bewegung des Dichtelements aufweist.

3. Anordnung nach einem der vorhergehenden Ansprüche, **dadurch gekennzeichnet, dass** die Nut an dem ersten Bauteil durch Verbindung zweier Nutschenkel hergestellt oder durch zwei nicht fest miteinander verbundene Nutschenkel gebildet ist.

4. Anordnung nach einem der vorhergehenden Ansprüche, **dadurch gekennzeichnet, dass** eine Mittellinie des Dichtelements mit einer Radialrichtung der Strömungsmaschine im Mittel einen Winkel einschließt, der höchstens 45° beträgt.

5. Anordnung nach einem der vorhergehenden Ansprüche, **dadurch gekennzeichnet, dass** das erste Dichtufer radial innen oder außen von dem zweiten Dichtufer angeordnet ist.

6. Anordnung nach einem der vorhergehenden Ansprüche, wobei sich die wenigstens eine Durchgangsbohrung (25) in dem Leitschaufelhaken zumindest im Wesentlichen in Radialrichtung erstreckt.

7. Anordnung nach einem der vorhergehenden Ansprüche, **dadurch gekennzeichnet, dass** das Dichtelement (30) eine Begrenzung für den Kühlluftstrom bildet.

8. Axiale Strömungsmaschine, die eine Gasturbine mit wenigstens einer Turbinen- oder Verdichterstufe ist, wobei die Turbinen- oder Verdichterstufe wenigstens eine Anordnung nach einem der vorhergehenden Ansprüche umfasst.

9. Verfahren zum Abdichten von dem ersten Dichtufer (10) des ersten statischen Bauteils und dem zweiten Dichtufer (20) des zweiten statischen Bauteils einer axialen Strömungsmaschine nach einem der vorhergehenden Ansprüche, **dadurch gekennzeichnet, dass** ein abzudichtender Überdruck das zweite Ende (32) des Dichtelements (30) gegen das zweite Dichtufer drückt.

## Claims

1. Arrangement of an axial turbomachine comprising a first static component, a second static component and a sealing element (30) for sealing a first sealing bank (10) of the first static component and a second sealing bank (20) of the second static component, the first static component being a housing component which has at least one housing hook (11) and the second static component being a guide vane component which has at least one guide vane (23) arranged on a platform (22) and at least one guide vane hook (21) projecting from the platform, or the second static component being a housing component which has at least one housing hook (11) and the first static component being a guide vane component which has at least one guide vane (23) arranged on a platform (22) and at least one guide vane hook (21) projecting from the platform, the at least one guide vane hook (21) being supported on the housing hook and at least one through-hole (25) for supplying cooling air being arranged in the guide vane hook, the static components being axially movable relative to one another and the sealing element (30) being segmented in the circumferential direction of the turbomachine, a first end (31) of the sealing element being axially coupled in a groove (12) on the first sealing bank of the first component, which groove is facing an opposite second end (32) of the sealing element, which end axially abuts the second sealing bank, the sealing element being an annular sector whose cross section is, at least substantially, an elongate rectangle and thus having, at least substantially, the same rigidity inside and outside, a groove width of the groove on the first component being at most three times a wall thickness of the sealing element, and the sealing element being attached to the first and the second static component in a spring-free manner and being prestressed against the second sealing bank, **characterized in that** the housing hook (11) has at least one recess (15) formed by an end depression, which at least partially covers the through-hole.

2. Arrangement according to the preceding claim, **characterized in that** the second sealing bank has a stop (24) for limiting a radial movement of the sealing element.

3. Arrangement according to either of the preceding claims,
**characterized in that** the groove on the first component is produced by connecting two groove legs or is formed by two groove legs which are not firmly connected to one another.

4. Arrangement according to any of the preceding claims,
**characterized in that** a center line of the sealing element encloses, on average, an angle of at most 45° with a radial direction of the turbomachine.

5. Arrangement according to any of the preceding claims,
**characterized in that** the first sealing bank is arranged radially inward or outward from the second sealing bank.

6. Arrangement according to any of the preceding claims, wherein the at least one through-hole (25) in the guide vane hook extends at least substantially in the radial direction.

7. Arrangement according to any of the preceding claims, **characterized in that** the sealing element (30) forms a boundary for the cooling air flow.

8. Axial turbomachine which is a gas turbine having at least one turbine or compressor stage, wherein the turbine or compressor stage comprises at least one arrangement according to any of the preceding claims.

9. Method for sealing the first sealing bank (10) of the first static component and the second sealing bank (20) of the second static component of an axial turbomachine according to any of the preceding claims, **characterized in that** an excess pressure to be sealed presses the second end (32) of the sealing element (30) against the second sealing bank.

## Revendications

1. Agencement d'une turbomachine axiale comportant un premier composant statique, un second composant statique et comportant un élément d'étanchéité (30) pour assurer l'étanchéité entre un premier bord d'étanchéité (10) du premier composant statique et un second bord d'étanchéité (20) du second composant statique, dans lequel le premier composant statique est un composant de boîtier comportant au moins un crochet de boîtier (11) et le second composant statique est un composant d'aube directrice comportant au moins une aube directrice (23) agencée sur une plate-forme (22) et au moins un crochet d'aube directrice (21) faisant saillie de la plate-forme ou le second composant statique est un composant de boîtier comportant au moins un crochet de boîtier (11) et le premier composant statique est un composant d'aube directrice comportant au moins une aube directrice (23) agencée sur une plate-forme (22) et au moins un crochet d'aube directrice (21) faisant saillie de la plate-forme, dans lequel l'au moins un crochet d'aube directrice (21) s'appuie sur le crochet de boîtier et au moins un trou de passage (25) est agencé dans le crochet d'aube directrice pour l'alimentation en air de refroidissement, dans lequel les composants statiques sont déplaçables axialement l'un par rapport à l'autre et l'élément d'étanchéité (30) est conçu de manière segmentée dans la direction périphérique de la turbomachine, dans lequel une première extrémité (31) de l'élément d'étanchéité est accouplée axialement dans une rainure (12) sur le premier bord d'étanchéité du premier composant, qui est tournée vers une seconde extrémité (32) opposée de l'élément d'étanchéité, qui s'applique axialement sur le second bord d'étanchéité, dans lequel l'élément d'étanchéité est un secteur annulaire dont la section transversale est, au moins sensiblement, un rectangle allongé et présente ainsi à l'intérieur et à l'extérieur, au moins sensiblement la même rigidité, dans lequel une largeur de rainure de la rainure sur le premier composant est au maximum le triple d'une épaisseur de paroi de l'élément d'étanchéité et dans lequel l'élément d'étanchéité est fixé sans ressort sur le premier et le second composant statique et est précontraint contre le second bord d'étanchéité, **caractérisé en ce que** le crochet de boîtier (11) présente au moins un évidement (15) formé par un retrait côté frontal, qui recouvre au moins partiellement le trou de passage.

2. Agencement selon la revendication précédente, **caractérisé en ce que** le second bord d'étanchéité présente une butée (24) pour limiter un mouvement radial de l'élément d'étanchéité.

3. Agencement selon l'une des revendications précédentes,
**caractérisé en ce que** la rainure est réalisée sur le premier composant par assemblage de deux branches de rainure ou est formée par deux branches de rainure non solidaires.

4. Agencement selon l'une des revendications précédentes, **caractérisé en ce qu'**une ligne centrale de l'élément d'étanchéité forme en moyenne avec une direction radiale de la turbomachine un angle qui est au plus égal à 45 °.

5. Agencement selon l'une des revendications précédentes,
**caractérisé en ce que** le premier bord d'étanchéité est agencé radialement à l'intérieur ou à l'extérieur du second bord d'étanchéité.

6. Agencement selon l'une des revendications précédentes, dans lequel l'au moins un trou traversant (25) dans le crochet d'aube de guidage s'étend au moins sensiblement dans la direction radiale.

7. Agencement selon l'une des revendications précédentes,
**caractérisé en ce que** l'élément d'étanchéité (30) forme une limite pour le flux d'air de refroidissement.

8. Turbomachine axiale qui est une turbine à gaz comportant au moins un étage de turbine ou de compresseur, dans lequel l'étage de turbine ou de compresseur comprend au moins un agencement selon l'une des revendications précédentes.

9. Procédé d'étanchéité entre le premier bord d'étanchéité (10) du premier composant statique et le second bord d'étanchéité (20) du second composant statique d'une turbomachine axiale selon l'une des revendications précédentes, **caractérisé en ce qu'**une surpression à étancher pousse la seconde extrémité (32) de l'élément d'étanchéité (30) contre le second bord d'étanchéité.
